# EUROPEAN PATENT SPECIFICATION

(11) **EP 1 796 095 B1**
(45) Date of publication and mention of the grant of the patent: **20.06.2012**
(21) Application number: 06301123.3
(22) Date of filing: 06.11.2006
(51) Int. Cl.: G11B 27/031, G06F 17/30

(54) **Method and device for cache pre-storage of streamed multimedia data for editing in a network environment.**
Verfahren und Vorrichtung zur Vorherspeicherung von gestreamten Multimedia Daten im Zwischenspeicher zum Editieren in einer Netzwerkumgebung.
Procédé et dispositif de pré-stockage en mémoire tampon de données multimédia diffusées en flux continu pour édition dans un environnement réseau.

(30) Priority: 08.12.2005 DE 102005059044
(43) Date of publication of application: 13.06.2007
(73) Proprietor: Thomson Licensing, 92130 Issy-les-Moulineaux (FR)
(72) Inventor: Aust, Andreas, 30177 Hannover (DE); Brocke, Jens, 30880 Laatzen (DE); Gläser, Frank, 30163 Hannover (DE); Köhler, Ralf, 30455 Hannover (DE)
(74) Representative: Ruellan-Lemonnier, Brigitte

(56) References cited:
- EP-A- 1 072 983
- EP-A- 1 503 381
- WO-A-01/99374
- US-A1- 2002 116 716
- US-B1- 6 201 924

## Description

The invention relates to the technical field of postediting of media contents in a network environment. Media contents are understood to mean audio/video contents and computer-generated contents, such as slide shows, electronic books or other larger text or graphics documents.

### Background of the invention

In the domain of studio engineering, what is known as server technology is making an ever greater entrance. The original material produced is no longer archived primarily on magnetic tapes. This is increasingly being done using what are known as server devices such as video servers and audio servers, which store the original data streams on large hard discs.

Previously, the original material has been postedited using primarily standalone computer systems equipped with appropriate replaceable hard discs/magnetic tape drives. The entry of streaming server technology into studios was also accompanied by networking at the individual server devices to one another and to the postediting computers. Today, powerful network systems are available for networking. Networks based on Ethernet technology - either using fibre optics or based on copper wires - are available today with transmission rates of up to 10 GB/s.

The server-based approach to postediting in the studio or during communication production has various advantages, such as greater availability of the original material, immediate access to the original material, better technical quality, etc., and will therefore be continued.

The document US-A-2002/0116716 has disclosed an online video postediting system in which a series of server devices storing the original data from media contents are networked to one another. This server system is also accessible externally via the Internet. A computer connected to the Internet can be used by a user to access the server system and to create his own media contents - based on the original data stored there. To this end, what are known as editing lists are produced in the external computer which are transmitted by Internet to the server system, are evaluated there and are then used to deliver an appropriately compiled media data stream. Application servers are provided in the server system in order to store the editing lists and to process them upon reproduction.

From the domain of conventional use of video server technology, e.g. for video-on-demand systems, it is known practice to transmit isochronous data streams from the server to the client using the Real Time Transport Protocol RTP and Real Time Streaming Protocol RTSP protocols based on Internet technology. In this respect, reference is made to the document by K. Schröder; H. Gebhardt « Audio-/ Video-Streaming über IP (Internet-Protokoll) » Ref. XP-000951790 in "Fernseh-und Kinotechnik", volume 54, No. 1 - 2/2000.

The document EP-A-1 503 381 shows a video/audio editing system and a control method in which video/audio material is archived on a server. Between the server and editing system memory storage devices are also arranged. In the method the whole data section is stored in the memory storage devices.

The document U.S. 6 201 924 goes a bit further into this point. It mentions that only a portion of the requested media section is stored in the cache memory, which is typically a few seconds at the beginning and at end of the media section.

Document WO 01/99374 defines a cache store using RTP/RTSP for autonomously thinning multimedia data according to priority of frames, key-frames having high or priority, followed by P-frames and B-frames having the lowest priority.

In paragraph 2.3.1 and reference [6], aforementioned document Ref. XP-000951790 briefly describes a Real Time Transport Protocol RTP. RTP is used extensively in communication and systems that involve streaming media Paragraph 2.4 and reference [8] of document Ref. XP-000951790 briefly describes Real Time Streaming Protocol RTSP protocol. RTSP is a network control protocol for use in entertainment and communications systems to control streaming media servers. The protocol is used to establish and control media sessions between endpoints. Clients of media servers issue VCR-Like commands, such as "play" and "pause" to facilitate real-time control of playback of media files from servers.

### Invention

When postediting media contents, great importance is attached to cut editing, particularly in the case of video films. Typically, the process of cut editing is a successive process in which coarse cuts and fine cuts come after one another relatively frequently, which means that after one another relatively frequently, which means that sections of video contents recurrently need to be transmitted to the cut editing device via the network. What is important is that the cut positions are produced with individual frame accuracy and that the transitions are made smoothly if appropriate and without disturbance. When editing a piece of documentation which makes use of a wide variety of sources, the problem may be a special one.

The aim of the invention is to reduce the burden on the network as a result of frequent transmission of the same or similar sections of audio/video contents.

The invention solves this problem by means of the measures based on independent Claims 1 and 8. In line with the invention, in the case of a method for editing media contents, particularly audio and/or video articles, in a network environment, the data path between the server device and the editing device contains a cache store which buffer-stores parts of the media contents around the start and end of a loaded section for the purpose of fast retrieval by the editing device. The cache store is also known by the term "Cache Memory". Buffer-storage of these critical passages around the start and end of a loaded section has a very advantageous effect for the postediting in a network environment. This allows multiple repetition of the video content in the network to be avoided. In one embodiment, the cache store may be part of the actual editing device.

The measures presented in the dependent claims allow developments and improvements for the inventive method. The Real Time Transport Protocol RTP is suitable for transmitting the data in the network, with the Real Time Streaming Protocol being able to be used for controlling the transmissions of the various sections. Both protocols are suitable for real time transmission of data streams.

The editing device creates and stores what is known as an editing list, e.g. cuts list, for the new composition. For playing back the article compiled in this manner, it is advantageous if the editing list is processed such that an RTSP command is produced for each data section in the new composition. This RTSP command is then passed to the server device, which delivers the desired data using RTP.

The start and end of a data section are characterized in the media domain, particularly the audio and video domains, by means of time statements. It is advantageous if the "Range" parameter indicated within an RTSP command is the start time and the end time for a data section in SMPTE time format. This allows the data to be characterized with individual frame accuracy.

It is very advantageous if for the purpose of buffer-storing the data sections around the start and end of a requested section the respective RTSP commands for the request for the section are evaluated and the time statements they contain for the start and end of the section are taken as a basis for producing new RTSP commands which relate to the reloading of the important parts of the media contents at least around the start and end of the requested section. This allows the reloading process to be fully automated. It is advantageous if a particular period is stipulated, particularly a number of seconds before and a number of seconds after the relevant time.

In the studio domain, it is desirable for the data to be transmitted in uncompressed form, so that no quality losses have to be accepted. The method described here can also be applied to the known practice using proxy files without restriction, however. When using proxy files, compressed versions of the original files are used in order to be able to operate with a greater resource saving. Cuts lists which have been created on the basis of the compressed files are applied to the uncompressed original files during mastering.

The invention also relates to a device for buffer-storing media contents for a method for editing media contents in a network environment. For this device, the invention provides that it has a cache store which is to buffer-store parts of requested media contents around the start and end of a requested section.

### Drawings

Exemplary embodiments of the invention are illustrated in the drawings and are explained in more detail in the description below.

In the drawings:
Figure 1
   shows a network system having a plurality of server devices and also two editing devices;

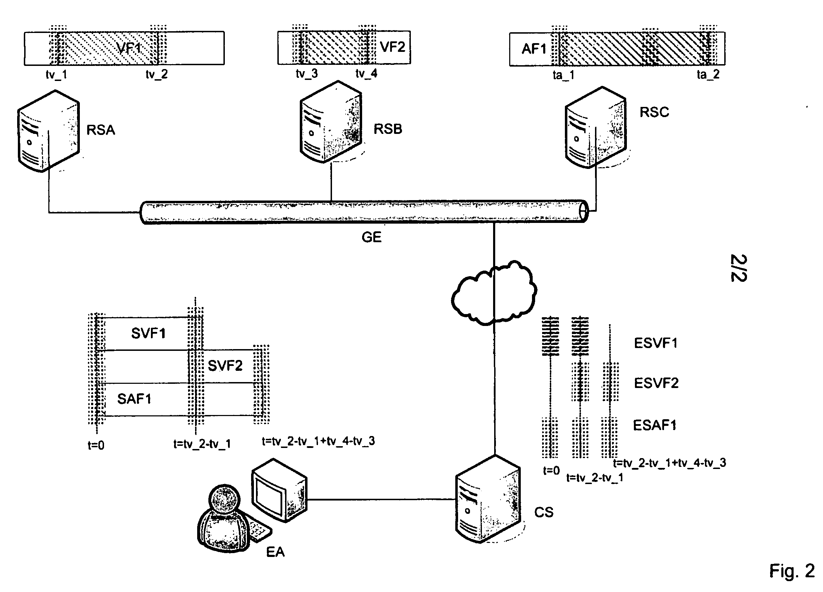

and Figure 2
   shows a network having a plurality of server devices and also an editing device and an upstream device for buffer-storing parts of the media contents which are stored on the server devices and which are of particular importance for postediting.

### Exemplary embodiments of the invention

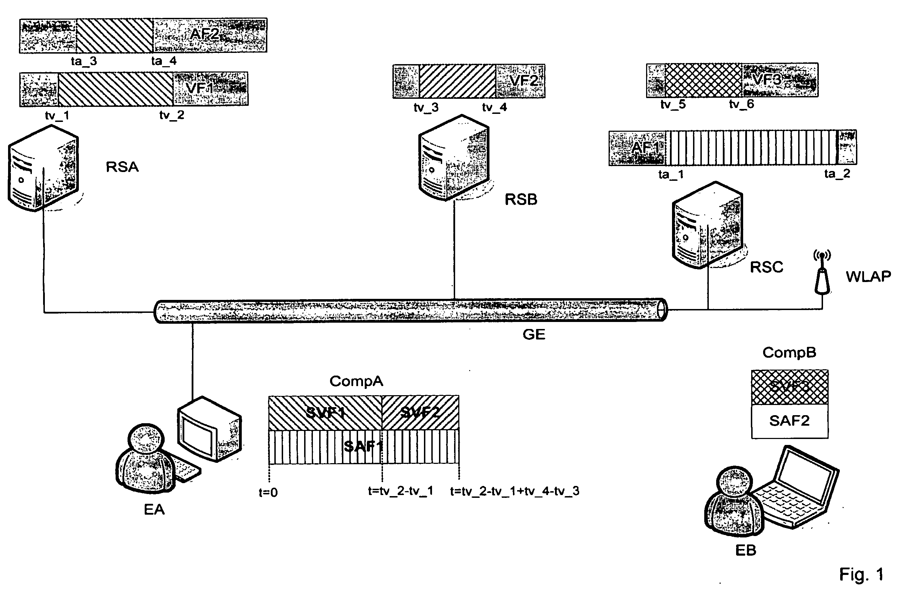

In Figure 1, the reference symbols RSA, RSB and RSC denote three different server devices which contain implementations of the protocols RTP and RTSP. These server devices store the starting material, e.g. video material or audio material recorded by a camera. The reference number VF1 denotes a first video document and accordingly the reference numbers VF2 and VF3 denote a second and a third video document. In addition, Figure 1 shows that it is also possible for audio documents to be stored. By way of example, the server device RSC stores an audio document AF1 and the server device RSA stores an audio document AF2. The individual server devices are connected to one another by means of a network. The network GE is a high-speed network, such as a 10-GB Ethernet network. The network GE has postediting devices EA and EB connected to it. In this case, the figure shows that the second postediting device EB is connected wirelessly to the network GE by means of a high-speed transmission link, the access point of said network being identified by WLAP in Figure 1. The transmission system WIFI is suitable for this, for example.

Each postediting device has access to the data stored on the individual server devices RSA to RSC via the network GE. For such postediting devices, applications are known which allow non-destructive, nonlinear postediting of video material and audio material on a document basis, with editing lists being created.

In this case, the editing list is the new composition without itself comprising the associated data content. The recorded video and/or audio material remains stored in the original content on the server devices. In the postediting device, the user produces the editing list, which, in a simple case, may contain the following entries, for example:
- at a time T = 0, play back the section of video file VF1 on RTP server A, from position tv_1 to position tv_2;
- at time T = 0, play back the section of audio file AF1 stored on RTP server RSC, from position ta_1 to position ta_2;
- at time T = tv_2, play back the section of video file VF2 on RTP server RSB from position tv_3 to tv_4.

This editing list would be used to describe the composition identified by the reference symbol CompA in Figure 1. The composition is shown in the form of a timeline.

A second example of an editing list for a composition CompB has the following entries:
- at time T = 0, play back a section of the video document VF3 on RTP server RSC from position tv_5 to position tv_6;
- at time T = 0, play back a section of the audio document AF2, stored on RTP server RSA, from position ta_3 to position ta_4.

The composition CompB is likewise shown in Figure 1. For playback in the respective editing device, every article composed in this manner is converted by an appropriate software program into individual RSTP commands which are transmitted to the associated server device via the network. In this case, the time statements in the editing lists are preferably indicated on the basis of the SMPTE time format in the form hour:minute:second:frame number, so that the data can be transmitted with individual frame accuracy. The RTSP protocol itself is known, which means that the details of this protocol do not need to be discussed below. Some RTSP commands are specified for initializing a session, requesting data and for the subsequent responses. The text below assumes that an RTSP session has been set up and is in existence. For the first entry in the editing list for composition B, the associated RTSP playback request would have the following appearance:
PLAY rtsp://rtpserver_C.com/VideoFile_3 RTSP/1.0
CSeq: 2
Session: 23456789
Range: smpte=0:10:00-0:15:00

The first line of this command contains the URL for the video document VF3 on the RTP server RSC. The statement in the second line C-Sequence:2 relates to the indication of a sequence number which is allocated by the request device. The third line contains the identification number for the session and the fourth line then contains the "Range" parameter with the two time statements in SMPTE format, from where to where the video document VF3 is intended to be played back.

Should the person editing composition B also have inserted a commentary track into his composition then this can also be stored on a server device. This can be done using the RTSP command "Record", and the commentary text can be recorded as an additional recording track for the sound.

Figure 2 shows an arrangement of three streaming server devices RSA to RSC which are connected by means of the network GE. An editing device EA is likewise connected to the network GE, with a device for buffer-storing CS media contents also being arranged between the editing device EA and the network GE. In line with the invention, the device for buffer-storage CS is intended to be used to relieve the network GE of repeat transmissions of media contents. This is done such that it holds frequently recurring sections of the media contents ready as in a cache memory arrangement or a proxy server.

One problem in this case is stipulating rules for how the frequently required media contents are to be identified. In this context, the invention takes the route that the areas around the start and end of a section of a media content which has been requested by the editing device are reloaded into the device for cache storage CS as a precaution. To this end, the device evaluates the RTSP commands which are sent from the editing device to the server devices. Experience shows that a new composition comprises a compilation of individual sections of recorded starting material. The cut boundaries with individual frame accuracy which are required in the case of new video compositions are, as described above, often stipulated accurately only little by little. Therefore, in line with the invention, for each section of a media document which is to be edited the areas around the boundaries of the respectively considered section of a media document are transferred to the cache store CS as a precaution. These boundary areas are respectively identified by a greyscale pattern in Figure 1. A special feature is shown for the audio document AF1. This is because in that case an area from the centre of the data section shown is likewise loaded into the buffer store CS between the times ta_1 and ta_2. Since, for the two video sections played back in parallel with the audio section, the conditions for cache storage are met during playback of the audio section, the relevant part from the centre of the audio section is also buffer-stored.

The relevant data sections are reloaded into the buffer store CS using the RTSP protocol. In this case, it is possible to define what area around the limit value needs to be requested. One implementation may involve requesting from the streaming server the area relating to a number of seconds before and a number of seconds after the respective limit value. An example value is the value 5 seconds before and after the respective start, end of the requested data section, for example.

To transmit the areas frequently requested by the editing device EA, just one respective data stream is then required between the memory CS and the editing device EA. The rest of the network GE is freed of this data traffic.

The buffer store can handle the RTSP commands in a similar manner to the known method for buffer-storing HTTP requests (HTTP Proxy). In this case, all requests from editing devices are intercepted, interpreted and forwarded. The forwarded requests are modified possibly in line with the method described here.

In another implementation, the buffer-store arrangement can also be integrated in the editing device EA.

## Claims

1. Method for post editing media contents (VF1, VF2, AF1), particularly audio and/or video contents, in a network environment, where media contents (VF1, VF2, AF1) are stored on more than one server devices (RSA, RSB, RSC), where data sections (SVF1, SVF2, SAF1) of media contents are loaded into an editing device (EA, EB) via the network (GE), wherein said editing device (EA, EB) request messages to load said data sections, and an editing list is created in order to describe a new composition pointing on data sections (SVF1, SVF2, SAF1) of media contents and sent to said server devices (RSA, RSB, RSC), wherein a first data section (SVF1) being played back first followed by a continuous playback of a second data section (SVF2) and in parallel with a third data section (AF1) having a start time and end time (ta_2 - ta_1) defining a period along the same timeline which is larger than the period defined by the start time and end time (tv_2-tv_1, tv_4-tv_3) of said first and second data section (SVF1, SVF2), wherein the data path between the server devices (RSA, RSB, RSC) and the editing device (EA) contains a cache store (CS) device, wherein parts (ESVF1, ESVF2) of the first and second data sections (SVF1, SVF2) and parts of the third data section (AF1) of the media contents around the respective start time and end time of said data sections (SVF1, SVF2, SAF1) to be edited being loaded in the cache store (CS) device for the purpose of faster retrieval, **characterized in that** an additional part (ESAF1) of the third data section (AF1), different from said parts of said third data section (AF1), is loaded in the cache store (CS) device, said additional part (ESAF1) corresponding to the end time of the first data section (SVF1) and to the start time of the second data section (SVF2) time limits, **in that** time limits of said additional part are (ESAF1) defined by said cache store (CS) device around the end time (tv_2-tv_1) of the first data section (SVF1) and the start time (tv_2-tv_1 of th second data section (SVF2), and **in that** said cache store (CS) device intercepts and interprets said request messages for loading said parts.

2. Method according to Claim 1, where the real time transport protocol RTP is used for transmitting the data sections (SVF1, SVF2, SAF1) of media contents (VF1, VF2, AF1) in the network environment and the real time streaming protocol RTSP is used for controlling the transmission of the data sections (SVF1, SVF2, SAF1) of media contents (VF1, VF2, AF1).

3. Method according to Claim 2, where the editing list is processed in order to play back the new composition and the real time streaming protocol RTSP is used for the respective request for a data section (SVF1, SVF2, SAF1) in the new composition.

4. Method according to one of Claims 1 to 3, where the command "Record" of real time transport protocol RTP is used for transmitting commentary text relating to the new composition for archiving on one of the server devices (RSA, RSB, RSC), and the commentary text is stored as a track, particularly an audio track, on a server device (RSA, RSB, RSC) additionally.

5. Method according to claim 4, wherein for the purpose of buffer-storing parts (ESVF1, ESVF2, ESAF1) of data sections (SVF1, SVF2, SAF1) to be edited, the respective RTSP commands for the request of a data section (SVF1, SVF2, SAF1) are evaluated and new RTSP commands which relate to the reloading of the parts (ESVF1, ESVF2, ESAF1) of the first, second and third data sections (SVF1, SVF2, SAF1) are generated based on the time statements they contain for the start time and end time of the data section (SVF1, SVF2, SAF1).

6. Method according to Claim 5, where the parts (ESVF1, ESVF2, ESAF1) of the first, second and third data sections (SVF1, SVF2, SAF1) relate to a stipulated period, particularly a number of seconds before and a number of seconds after the given time.

7. Method according to one of the preceding claims, where the data sections (SVF1, SVF2, SAF1) of media contents (VF1, VF2, AF1) are transmitted in uncompressed form via the network (GE).

8. Device for the cache storage of media data comprising evaluation means for intercepting and interpreting request messages produced by an editing device (EA), said request messages requiring a data section of media contents (VF1, VF2, AF1) stored on more than one server devices, a first requested data section (SVF1) being intended to be played back first followed by a continuous second requested data section (SVF2) and a third requested data section (SAF1) being intended to be played back in parallel with said first and second data sections (SVF1, SVF2), said third requested data section (SAF1) having a start time and end time(ta_2- ta_1) defining a period along the same timeline which is larger than the period defined by the start time and end time (tv_2-tv_1, tv_4-tv_3) of said first and second data section (SVF1, SVF2), said device being connected to said server devices (RSA, RSB, RSC) via a network and said device further comprising a cache store (CS) in which parts (ESVF1, ESVF2) of the first, second and third data sections (SVF1, SVF2, SAF1) of the media contents around the respective start time and end time of the requested data sections (SVF1, SVF2, SAF1) are loaded for the purpose of fast retrieval in response to a request forwarded by said evaluation means, said cache store is comprised in a data path of said network between the server devices (RSA, RSB, RSC) and the editing device (EA), **characterized in that** the evaluation means are designed such that an additional part (ESAF1) of the third requested data section (SAF1), different from said parts of said third data section (AF1), corresponding to the start time of first data section (SVF1) and to the end time of second data section (SVF2) is further loaded in the cache store (CS) **and in that** time limits of said additional part (ESAF1) are defined by said evaluation means from time statements indicating the end time (tv_2-tv_1) of the first data section (SVF1) and the start time (tv_2-tv_1) of the second data section (SVF2) comprised in said request messages.

9. Device according to Claim 8, where evaluation means on the basis of the evaluation they perform, create separate request messages in order to load parts (ESVF1, ESVF2, ESAF1) of the first, second and third requested data sections (SVF1, SVF2, SAF1) automatically in the cache store.

10. Device according to one of Claims 8 or 9, where the evaluation means are designed to evaluate commands of the real time streaming protocol RTSP which are used to request the data sections (SVF1, SVF2, SAF1) of media contents (VF1, VF2, AF1).

11. Device according to one of Claims 8 to 10, where the evaluation means are designed to create request messages for loading the parts (ESVF1, ESVF2, ESAF1) of the first, second and third requested data sections (SVF1, SVF2, SAF1) in the format of commands of the real time streaming protocol RTSP.

## Patentansprüche

1. Verfahren zum Nachbearbeiten von Medieninhalten (VF1, VF2, AF1), insbesondere Audio- und/oder Videoinhalten, in einer Netzwerkumgebung, wobei Medieninhalte (VF1, VF2, AF1) auf mehr als einem Servergerät (RSA, RSB, RSC) abgespeichert sind, wobei Datenabschnitte (SVF1, SVF2, SAF1) von Medieninhalten über das Netzwerk (GE) in ein Bearbeitungsgerät (EA, EB) geladen werden, wobei das Bearbeitungsgerät (EA, EB) Anforderungsnachrichten zum Laden der Datenabschnitte sendet, und wobei eine Bearbeitungsliste erstellt wird, um eine Neukomposition zu beschreiben, die auf Datenabschnitte (SVF1, SVF2, SAF1) von Medieninhalten zeigt, und an die Servergeräte (RSA, RSB, RSC) gesendet wird, wobei ein erster Datenabschnitt (SVF1) zuerst abgespielt wird, gefolgt von einem ununterbrochenen Abspielen eines zweiten Datenabschnitts (SVF2) und parallel mit einem dritten Datenabschnitt (AF1) mit einer Anfangszeit und einer Endzeit (t_ 2-ta_1), die eine Zeitdauer entlang derselben Zeitachse definieren, die größer als die Zeitdauer ist, die durch die Anfangszeit und die Endzeit (tv_2-tv_1, tv_4-tv_3) des ersten und des zweiten Datenabschnitts (SVF1, SVF2) definiert ist, wobei der Datenpfad zwischen den Servergeräten (RSA, RSB, RSC) und dem Bearbeitungsgerät (EA) ein Vorratsspeichergerät (CS) enthält, in dem Teile (ESVF1, ESVF2) des ersten und des zweiten Datenabschnitts (SVF1, SVF2) und Teile des dritten Datenabschnitts (AF1) der Medieninhalte um die Anfangszeit bzw. um die Endzeit der zu bearbeiteten Datenabschnitte (SVF1, SVF2, SAF1) zur schnelleren Wiedergewinnung in das Vorratsspeichergerät (CS) geladen werden, **dadurch gekennzeichnet, dass** ein von den Teilen des dritten Datenabschnitts (AF1) verschiedener zusätzlicher Teil (ESAF1) des dritten Datenabschnitts (AF1) in das Vorratsspeichergerät (CS) geladen wird, wobei der zusätzliche Teil (ESAF1) der Endzeit des ersten Datenabschnitts (SVF1) und der Anfangszeit des zweiten Datenabschnitts (SVF2) entspricht, dass durch das Vorratsspeichergerät (CS) um die Endzeit (tv_2-tv_1) des ersten Datenabschnitts (SVF1) und um die Anfangszeit (tv_2-tv_1) des zweiten Datenabschnitts (SVF2) Zeitgrenzen des zusätzlichen Teils (ESAF1) definiert werden und dass das Vorratsspeichergerät (CS) die Anforderungsnachrichten zum Laden der Teile abfängt und interpretiert.

2. Verfahren nach Anspruch 1, wobei für die Übertragung der Datenabschnitte (SVF1, SVF2, SAF1) von Medieninhalten (VF1, VF2, AF1) in der Netzwerkumgebung das Real-Time-Transport-Protokoll RTP verwendet wird und zur Steuerung der Übertragung der Datenabschnitte (SVF1, SVF2, SAF1) von Medieninhalten (VF1, VF2, AF1) das Real-Time-Streaming-Protokoll RTSP verwendet wird.

3. Verfahren nach Anspruch 2, wobei die Bearbeitungsliste zum Abspielen der Neukomposition abgearbeitet wird und jeweils für die Anforderung eines Datenabschnitts (SVF1, SVF2, SAF1) in der Neukomposition das Real-Time-Streaming-Protokoll RTSP verwendet wird.

4. Verfahren nach einem der Ansprüche 1 bis 3, wobei das Kommando "Record" des Real-Time-Transport-Protokolls RTP für die Übertragung von Kommentartext, der sich auf die Neukomposition zur Archivierung auf einem der Servergeräte (RSA, RSB, RSC) bezieht, verwendet wird, und der Kommentartext als Spur, insbesondere Audio-Spur, auf einem Servergerät (RSA, RSB, RSC) zusätzlich abgespeichert wird.

5. Verfahren nach Anspruch 4, bei dem zur Pufferspeicherung von Teilen (ESVF1, ESVF2, ESAF1) von zu bearbeitenden Datenabschnitten (SVF1, SVF2, SAF1) die jeweiligen RTSP-Kommandos für die Anforderung eines Datenabschnitts (SVF1, SVF2, SAF1) ausgewertet werden und auf der Grundlage der Zeitaussagen, die sie für die Anfangszeit und für die Endzeit des Datenabschnitts (SVF1, SVF2, SAF1) enthalten, neue RTSP-Kommandos erzeugt werden, die sich auf das Nachladen der Teile (ESVF1, ESVF2, ESAF1) des ersten, des zweiten und des dritten Datenabschnitts (SVF1, SVF2, SAF1) beziehen.

6. Verfahren nach Anspruch 5, wobei sich die Teile (ESVF1, ESVF2, ESAF1) des ersten, des zweiten und des dritten Datenabschnitts (SVF1, SVF2, SAF1) auf einen festgelegten Zeitraum, insbesondere eine Anzahl Sekunden vor und eine Anzahl Sekunden nach dem gegebenen Zeitpunkt, beziehen.

7. Verfahren nach einem der vorhergehenden Ansprüche, wobei die Datenabschnitte (SVF1, SVF2, SAF1) von Medieninhalten (VF1, VF2, AF1) in unkomprimierter Form über das Netzwerk (GE) übertragen werden.

8. Gerät zur Vorratsspeicherung von Mediendaten, das Auswertemittel zum Abfangen und Interpretieren von Anforderungsnachrichten umfasst, die durch ein Bearbeitungsgerät (EA) erzeugt werden, wobei die Anforderungsnachrichten einen Datenabschnitt von Medieninhalten (VF1, VF2, AF1) anfordern, die in mehr als einem Servergerät gespeichert sind, wobei auf einen ersten angeforderten Datenabschnitt (SVF1), der zuerst abgespielt werden soll, ein ununterbrochener zweiter angeforderter Datenabschnitt (SVF2) und dritter angeforderter Datenabschnitt (SAF1) folgt, die parallel zu dem ersten und zu dem zweiten Datenabschnitt (SVF1, SVF2) abgespielt werden sollen, wobei der dritte angeforderte Datenabschnitt (SAF1) eine Anfangszeit und eine Endzeit (ta_2-ta_1) besitzt, die eine Zeitdauer entlang derselben Zeitachse definieren, die größer als die Zeitdauer ist, die durch die Anfangszeit und die Endzeit (tv_2-tv_1, tv_4-tv_3) des ersten und des zweiten Datenabschnitts (SVF1, SVF2) definiert ist, wobei das Gerät mit den Servergeräten (RSA, RSB, RSC) über ein Netz verbunden ist und wobei das Gerät ferner ein Vorratsspeichergerät (CS) umfasst, in das Teile (ESVF1, ESVF2) des ersten, des zweiten und des dritten Datenabschnitts (SVF1, SVF2, SAF1) der Medieninhalte um die Anfangszeit bzw. um die Endzeit der angeforderten Datenabschnitte (SVF1, SVF2, SAF1) zur schnellen Wiedergewinnung in Reaktion auf eine durch das Auswertemittel weitergeleitete Anforderung geladen werden, wobei der Vorratsspeicher in einem Datenpfad des Netzwerks zwischen den Servergeräten (RSA, RSB, RSC) und dem Bearbeitungsgerät (EA) enthalten ist, **dadurch gekennzeichnet, dass** die Auswertemittel so ausgelegt sind, dass ferner ein von den Teilen des dritten Datenabschnitts (AF1) verschiedener zusätzlicher Teil (ESAF1) des dritten angeforderten Datenabschnitts (SAF1), der der Anfangszeit des ersten Datenabschnitts (SVF1) und der Endzeit des zweiten Datenabschnitts (SVF2) entspricht, in das Vorratsspeichergerät (CS) geladen wird, und dass durch die Auswertemittel aus Zeitaussagen, die die Endzeit (tv_2-tv_1) des ersten Datenabschnitts (SVF1) und die Anfangszeit (tv_2-tv_1) des zweiten Datenabschnitts (SVF2) angeben, die in den Anforderungsnachrichten enthalten sind, Zeitgrenzen des zusätzlichen Teils (ESAF1) definiert werden.

9. Gerät nach Anspruch 8, wobei die Auswertemittel auf der Grundlage der Auswertung, die sie ausführen, getrennte Anforderungsnachrichten erzeugen, um Teile (ESVF1, ESVF2, ESAF1) des ersten, des zweiten und des dritten Datenabschnitts (SVF1, SVF2, SAF1) automatisch in den Vorratsspeicher zu laden.

10. Gerät nach einem der Ansprüche 8 oder 9, wobei die Auswertemittel zur Auswertung von Kommandos des Real-Time-Streaming-Protokolls RTSP ausgelegt sind, die verwendet werden, um die Datenabschnitte (SVF1, SVF2, SAF1) von Medieninhalten (VF1, VF2, AF1) anzufordern.

11. Gerät nach einem der Ansprüche 8 bis 10, wobei die Auswertemittel zur Erstellung von Anforderungsnachrichten für die Ladung der Teile (ESVF1, ESVF2, ESAF1) des ersten, des zweiten und des dritten angeforderten Datenabschnitts (SVF1, SVF2, SAF1) in dem Format von Kommandos des Real-Time-Streaming-Protokolls RTSP ausgelegt sind.

## Revendications

1. Procédé pour la post-édition de contenus média (VF1, VF2, AF1), et particulièrement des contenus audio eUou vidéo, dans un environnement de réseau, où les contenus média (VF1, VF2, AF1) sont stockés sur plus d'un dispositif de serveur (RSA, RSB, RSC), où les sections de données (SVF1, SVF2, SAF1) des contenus média sont chargées dans un dispositif d'édition (EA, EB) via le réseau (GE), dans lequel ledit dispositif d'édition (EA, EB) émet des messages de demande pour charger lesdites sections de données, et une liste d'édition est créée afin de décrire une nouvelle composition pointant sur des sections de données (SVF1, SVF2, SAF1.) de contenus média et envoyée auxdits dispositifs de serveur (RSA, RSB, RSC), où une première section de données (SVF1) est reproduite d'abord et suivie par une reproduction continue d'une deuxième section de données (SVF2) et parallèlement à une troisième section de données (AF1) ayant une heure de début et une heure de fin (ta_2 - ta_1) définissant une période dans la même frise chronologique qui est plus longue que la période définie par l'heure de début et l'heure de fin (tv_2-tv_1, tv_4-tv_3) desdites première et seconde sections de données (SVF1, SVF2), où le chemin de données entre les dispositifs de serveur (RSA, RSB, RSC) et le dispositif d'édition (EA) contient un dispositif de stockage en mémoire tampon (CS), dans lequel les parties (ESVF1, ESVF2) des première et seconde sections de données (SVF1, SVF2) et les parties de la troisième section de données (AF1) des contenus média concernant les heures respectives de début et de fin desdites sections de données (SVF1, SVF2, SAF1) à éditer et étant situées dans le dispositif de stockage en mémoire tampon (CS) pour une récupération plus rapide, **caractérisé en ce qu'**une partie supplémentaire (ESAF1) de la troisième section de données (AF1), différente desdites parties de ladite troisième section de données (AF1), est chargée dans le dispositif de stockage en mémoire tampon (CS), ladite partie supplémentaire (ESAF1) correspondant à l'heure de fin de la première section de données (SVF1) et à l'heure de début de la deuxième section de données (SVF2), dans ces limites de temps desdites parties supplémentaires (ESAF1) définies par ledit dispositif de stockage mémoire tampon (CS) concernant l'heure de fin (tv_2-tv_1) de la première section de données (SVF1) et l'heure de début (tv_2-tv_1) de la seconde section de données (SVF2), et **en ce que** ledit dispositif de stockage mémoire tampon (CS) intercepte et interprète lesdits messages de requête pour le chargement desdites parties.

2. Procédé selon la revendication 1, où le protocole RTP de transport en temps réel est utilisé pour transmettre les sections de données (SVF1, SVF2, SAF1) des contenus média (VF1, VF2, AF1) dans l'environnement de réseau et le protocole RTSP de flux en temps réel est utilisé pour contrôler la transmission des sections de données (SVF1, SVF2, SAF1) des contenus média (VF1, VF2, AF1).

3. Procédé selon la revendication 2, où la liste d'édition est traitée afin de reproduire la nouvelle composition et le protocole RTSP de flux en temps réel est utilisé pour la demande respective d'une section de données (SVF1, SVF2, SAF1) dans la nouvelle composition.

4. Procédé selon l'une des revendications 1 à 3, où la commande « Record » du protocole RTP de transport en temps réel est utilisée pour transmettre le texte de commentaire relatif à la nouvelle composition pour archiver sur un des dispositifs de serveur (RSA, RSB, RSC), et le texte de commentaire est stocké comme une piste, particulièrement une piste audio, et de plus sur un dispositif de serveur (RSA, RSB, RSC).

5. Procédé selon la revendication 4, dans lequel à des fins de stockage en mémoire tampon des parties (ESVF1, ESVF2, ESAF1) des sections de données (SVF1, SVF2, SAF1) à éditer, les commandes RTSP respectives pour la demande d'une section de données (SVF1, SVF2, SAF1) sont évaluées et les nouvelles commandes RTSP qui sont relatives au rechargement des parties (ESVF1, ESVF2, ESAF1) des première, deuxième et troisième sections de données (SVF1, SVF2, SAF1) sont générées d'après les déclarations d'heure qu'elles contiennent pour l'heure de début et l'heure de fin de la section de données (SVF1, SVF2, SAF1).

6. Procédé selon la revendication 5, où les parties (ESVF1, ESVF2, ESAF1) des première, deuxième et troisième sections de données (SVF1, SVF2, SAF1) renvoient à une période stipulée, particulièrement à un nombre de secondes avant et à un nombre de secondes après l'heure donnée.

7. Procédé selon l'une des revendications précédentes, où les sections de données (SVF1, SVF2, SAF1) des contenus média (VF1, VF2, AF1) sont transmises sous forme non compressée via le réseau (GE).

8. Dispositif pour le stockage en mémoire tampon des données média comprenant un moyen d'évaluation pour intercepter et interpréter les messages de requête produits par un dispositif d'édition (EA), lesdits messages de requête exigeant une section de données de contenus média (VF1, VF2, AF1) stockée sur des dispositifs de serveur, une première section de données requise (SVF1) étant destinée à être reproduite d'abord suivie d'une deuxième section de donnée requise continue (SVF2) et d'une troisième section de données requise (SAF1) étant destinée à être reproduite parallèlement auxdites première et deuxième sections de données (SVF1, SVF2), ladite troisième section de données requise (SAF1) ayant une heure de début et une heure de fin (ta_2- ta_1) définissant une période dans une même frise chronologique qui est plus longue que la période définie par l'heure de début et l'heure de fin (tv_2-tv_1, tv_4-tv_3) desdites première et deuxième sections de données (SVF1, SVF2), ledit dispositif étant raccordé auxdits dispositifs de serveur (RSA, RSB, RSC) via un réseau et ledit dispositif comprenant en outre un dispositif de stockage en mémoire tampon (CS) dans lequel les parties (ESVF1, ESVF2) des première, deuxième et troisième sections de données (SVF1, SVF2, SAF1) des contenus média autour des heures respectives de début et de fin des sections de données (SVF1, SVF2, SAF1) sont chargées à des fins de récupération rapide en réponse à une demande transmise par ledit moyen d'évaluation, ledit dispositif de stockage en mémoire tampon est compris dans un chemin de données dudit réseau entre les dispositifs de serveur (RSA, RSB, RSC) et le dispositif d'édition (EA), **caractérisé en ce que** les moyens d'évaluation sont conçus de sorte qu'une partie supplémentaire (ESAF1) de la troisième section de données requise (SAF1), différente desdites parties de ladite troisième section de données (AF1), correspondant à l'heure de début de la première section de données (SVF1) et à l'heure de fin de la deuxième section de données (SVF2) est en outre chargée dans le dispositif de stockage en mémoire tampon (CS) et **en ce que** les limites de temps de ladite partie supplémentaire (ESAF1) sont définies par lesdits moyens d'évaluation à partir des déclarations de temps indiquant l'heure de fin (tv_2-tv_1) de la première section de données (SVF1) et l'heure de début (tv_2-tv_1) de la seconde section de données (SVF2) comprise dans lesdits messages de requête.

9. Dispositif selon la revendication 8, où les moyens d'évaluation d'après l'évaluation qu'ils effectuent, créent des messages de requête séparés afin de charger des parties (ESVF1, ESVF2, ESAF1) des première, deuxième et troisième sections de données (SVF1, SVF2, SAF1) automatiquement dans le dispositif de stockage en mémoire tampon.

10. Dispositif selon l'une des revendications 8 ou 9, où les moyens d'évaluation sont conçus pour évaluer les commandes du protocole RTSP de flux en temps réel qui sont utilisées pour la requête des sections de données (SVF1, SVF2, SAF1.) des contenus média (VF1, VF2, AF1).

11. Dispositif selon l'une des revendications 8 à 10, où les moyens d'évaluation sont conçus pour créer des messages de requête pour le chargement des parties (ESVF1, ESVF2, ESAF1) des première, deuxième et troisième sections de données requises (SVF1, SVF2, SAF1.) dans le format des commandes du protocole RTSP de flux en temps réel.
